# EUROPEAN PATENT APPLICATION

(11) **EP 3 561 424 A1**
(43) Date of publication of application: **30.10.2019**
(21) Application number: 19020300.0
(22) Date of filing: 19.04.2019
(51) Int. Cl.: F28D 7/08, F28D 21/00, F24H 1/20, F24H 8/00

(54) **SYSTEM FOR HEATING LIQUID AND VOLATILE SUBSTANCES BY MEANS OF A COMBUSTION HEAT EXCHANGER POWERED BY EXHAUST FUMES IN THE UPPER PART AND EXHAUST FUMES EJECTION IN THE LOWER PART**

(30) Priority: 23.04.2018 PL 42531918
(71) Applicant: Erdei, Krzysztof, 60-135 Poznan (PL)
(72) Inventor: Erdei, Krzysztof, 60-135 Poznan (PL)

(57) **Abstract**

The subject of the invention is a system enabling heating of liquid and volatile substances by means of a combustion heat exchanger powered by exhaust fumes in the upper part and exhaust fumes ejection in the lower part a combustion heat exchanger (10) with an exhaust gas inlet connection (9) in the upper part (3) and an exhaust gas connection (11) in the lower part (4), a tank (6) with an inlet pipe (7) in the lower part and an exhaust pipe (8) in the upper part, a burner (1), a flue pipe (2) and an exhaust pipe (5).

## Description

System for heating liquid and volatile substances by means of a combustion heat exchanger powered by exhaust fumes in the upper part and exhaust fumes ejection in the lower part.

The subject of the invention is a system for heating liquid and volatile substances by means of a combustion heat exchanger powered by exhaust fumes in the upper part and exhaust fumes ejection in the lower part.

On the market there are known solutions, where flue gases move between the elements of the heat exchanger, providing heat energy to fluids flowing through the exchanger.

In a non-condensing boiler, the water returning from the central heating system flows into the water exchanger, receiving the heat from the flue gases. The exhaust gases are cooled significantly, but not below the dew point temperature.
The temperature of the flue gases remains high enough to eject them via a chimney by means of the chimney draught.

Condensing boilers are devices with a closed combustion chamber and forced flue gas flow. In condensing boilers there are two independent heat exchangers or just one - two-stage exchanger: Water returning from the central heating system flows into the water heat exchanger/water heat exchangers, taking heat from the flue gases and cooling them up to below the dew point temperature.

The heating system for liquid and volatile substances, based on the combustion heat exchanger powered with exhaust gases in the upper part and exhaust gas discharge in the lower part, according to the invention comprises a combustion heat exchanger (10) with an exhaust gas inlet connection (9) in the upper part (3) and an exhaust gas connection (11) in the lower part (4), a tank (6) with an inlet pipe (7) in the lower part and an exhaust pipe (8) in the upper part, a burner (1), a flue pipe (2) and an exhaust pipe (5). The essence of the invention is that the upper part of the combustion heat exchanger is supplied, from the burner and the flue pipe - via the inlet connection of the heating medium - with the flue gases. The exchanger is installed inside the heated substance tank. The heat exchanger pipes are laid sloped towards its lower part and the exhaust pipe, which is connected to the fumes exhaust pipe.

The heating system for liquid and volatile substances, according to the invention enables a wide application of it, primarily in the form of central heating devices for buildings and structures, heating of water for household and industrial purposes, heating of other liquids, heating of air and other volatile substances.

A very important advantage of the presented heat exchanger is its simple design and a simple construction with associated high efficiency, which can have a significant impact on the cost of implementation into production on an industrial scale.

According to the invention, the upper part (3) of the combustion heat exchanger (10) - which is placed in a tank (6) filled with a heated substance - is supplied with hot combustion gases produced as a result of fuel combustion in the burner (1); they are directed via the chimney (2) and the inlet connection of the combustion gas (9) to the combustion heat exchanger (10), where - gradually giving the thermal energy of the heated substance back, for example, into water in the tank (6) - the process of cooling them and reducing their volume begins with a simultaneous increase in weight; this makes they move downward through the tubes which connect the fumes exhaust inlet (9) with the exhaust gas pipe (11) - the exhaust gas heat exchanger (10) in the direction of its lower part (4), from where, via a horizontal pipe (5) they are ejected into outside.

The exhaust gas circulation is automatic and therefore the system does not require any mechanical devices consuming electrical energy in the process of forcing the circulation of exhaust fumes. The tubes of the exhaust heat exchanger (10) run down from the top (3) to the bottom (4) and enable the exhaust gas to fall down finally, and failing of condensate (produced when fumes are cooled down) - in case when the temperature of dew point is reached by the exhaust gases - and their ejection by a flue gas discharge pipe (5).

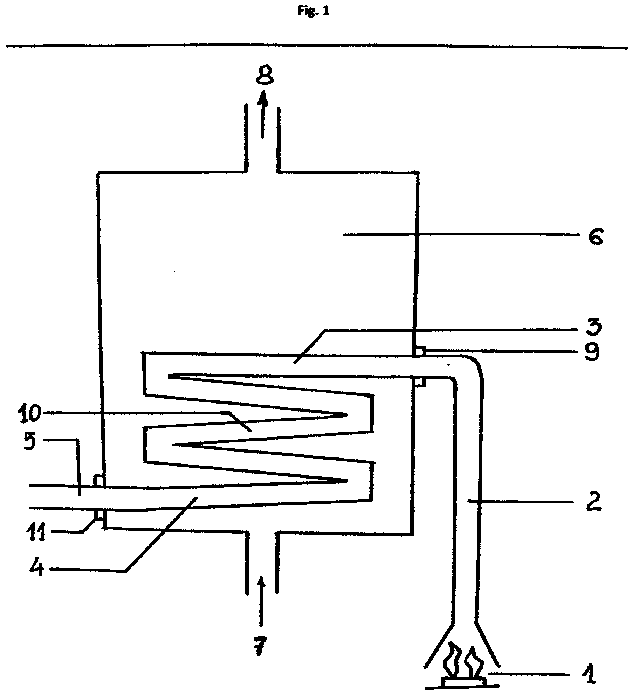

The subject of the invention is presented in the Figure 1.

The effects of applying the invention:
Effect 1 - low implementation costs for production on an industrial scale due to the lack of complicated elements conditioning the proper functioning of the system
Effect 2 - low cost of production due to the simple construction
Effect 3 - low failure rate due to uncomplicated construction
Effect 4 - low operating costs due to high efficiency
Effect 5 - it is possible to obtain a low, attractive price for a potential buyer
Effect 6 - simplified service
Effect 7 - low costs associated with the removal of fumes - no traditional chimney - horizontal exhaust fumes

## Claims

1. A system if heating of liquid and volatile substances by means of a combustion heat exchanger, hereinafter referred to as 'the system' - comprising a combustion heat exchanger(10), having in its upper part (3) the exhaust gas inlet port (9), and in its lower part (4), the exhaust gas connection (11), heated substance storage tank (6) with an inlet pipe (7) in the lower part and in the upper part - the exhaust pipe (8), burner (1), flue pipe (2) and fumes discharge pipe (5). The characteristic feature is the fact that the exhaust gas heat exchanger (10) is supplied with exhaust gas in the upper part (3) and the exhaust gas is discharged in the lower part (4) after the heated substance has received the heat energy stored in the exhaust gas.

2. The system, according to reservation 1 is **characterized in that** the combustion heat exchanger (10) is placed in a tank (6) filled with heated substance.

3. The system according to reservation 1 is **characterized in that** - as a result of the combination of the chimney effect causing the flue gases rise in the flue pipe (2) and the fall of the cooled flue gases from the upper part (3) towards the lower part (4) of the flue gas heat exchanger (10) - the flue gases circulate automatically.

4. The system according to reservation 1 is **characterized in that** it does not require any mechanical devices that consume electric energy in the process of forcing the circulation of the exhaust gases.

5. System acc. to reservation 1 is **characterized in that** the exhaust gas pipe of the heat exchanger (10) conducted with a drop from the upper part (3) to the lower part (4), enable the exhaust gases and the condensate produced during the cooling of the exhaust gases to fall - when the exhaust gases reach the dew point temperature - and to eject them via the exhaust gas discharge pipe (5).

6. The system according to reservation 1 is **characterized in that** the exhaust gas and the condensate are removed through a horizontal exhaust gas discharge pipe(5)
